# EUROPÄISCHE PATENTSCHRIFT

(11) **EP 3 157 817 B1**
(45) Veröffentlichungstag und Bekanntmachung des Hinweises auf die Patenterteilung: **28.08.2019**
(21) Anmeldenummer: 15721119.4
(22) Anmeldetag: 22.04.2015
(51) Int. Cl.: B65B 19/28, B41J 3/00, B41J 29/393, B65B 57/02, B65B 61/02, B65B 61/26, B65B 63/00, G01N 21/90, G06T 7/00, B41J 11/00, G01N 21/95

(54) **VERFAHREN UND VORRICHTUNG ZUM AUFBRINGEN UND PRÜFEN VON AUFDRUCKEN AUF ZIGARETTENPACKUNGEN**
METHOD AND APPARATUS FOR APPLYING IMPRINTS TO CIGARETTE PACKS AND FOR CHECKING THE SAME
PROCÉDÉ ET DISPOSITIF D'APPLICATION ET DE CONTRÔLE D'IMPRESSIONS SUR DES PAQUETS DE CIGARETTES

(30) Priorität: 20.06.2014 DE 102014008846
(43) Veröffentlichungstag der Anmeldung: 26.04.2017
(73) Patentinhaber: Focke & Co. (GmbH & Co. KG), 27283 Verden (DE)
(72) Erfinder: KRAL, Vincent, 28203 Bremen (DE)
(74) Vertreter: Aulich, Martin
(86) Internationale Anmeldenummer: PCT/EP2015/000831
(87) Internationale Veröffentlichungsnummer: WO 2015/192930

(56) Entgegenhaltungen:
- EP-A2- 2 713 596
- WO-A1-2013/178418
- DE-A1-102008 062 370
- US-A1- 2002 024 577
- US-A1- 2008 106 568
- US-B1- 7 529 636

## Beschreibung

Die vorliegende Erfindung betrifft ein Verfahren zum automatischen Aufbringen von Aufdrucken auf bei der Herstellung und/oder Verpackung von Zigaretten verwendeten Druckträgern, insbesondere auf Zigarettenpackungen oder Zuschnitten für Zigarettenpackungen, und zum nachfolgenden automatischen optischen Prüfen der Aufdrucke, bei dem im Rahmen des Herstellungs- und/oder Verpackungsprozesses der jeweilige Aufdruck mittels eines Druckwerks, insbesondere eines Laserdruckers, auf den Druckträger aufgebracht wird, sowie mindestens ein den aufgebrachten Aufdruck beinhaltendes Prüfbild mit einem Prüforgan aufgenommen wird, insbesondere einer Kamera. Die Erfindung betrifft des Weiteren eine Druck- und Prüfvorrichtung zur Durchführung dieses Verfahrens.

Bei in der Zigarettenindustrie eingesetzten Verpackungsmaschinen werden elektrooptisch arbeitende Prüfsysteme unter anderem verwendet, um "inline" Aufdrucke auf Zigarettenpackungen zu prüfen. Dabei erfasst eine Kamera des Prüfsystems die Packungsseite, auf der sich der Aufdruck befindet. Aus dem aufgenommen Prüfbild extrahiert das Prüfsystem beispielsweise per OCR (Texterkennung) Texte innerhalb des Aufdrucks und vergleicht deren Position, Ausrichtung etc. mit von der Maschinensteuerung vorgegebenen Referenzwerten bzw. Referenzinformationen. Um das Prüfsystem in die Lage zu versetzen, solche Texte im Produktionsprozess erkennen zu können, wird dieses üblicherweise anhand einer Ideal- bzw. Referenzpackung mit entsprechendem Referenzaufdruck angelernt bzw. "geteached". Dieses Verfahren stößt an seine Grenzen, wenn die Schrifttypen, die dem Prüfsystem im Rahmen des Anlernvorgangs beigebracht werden müssen, immer komplexer werden. Beispielsweise das Anlernen von chinesischen Schriftzeichen wäre äußerst herausfordernd.

In der DE 10 2008 062 370 A1 werden Prüfobjekte, z. B. Aufdrucke auf Zigarettenpackungen, mithilfe einer Kamera optisch geprüft. Die Kamera erfasst mindestens ein Bild des Prüfobjekts, welches in einer Steuereinheit mit einem Referenzbild verglichen wird. Als Referenzbild dient ein zuvor aufgenommenes Bild eines Referenzprüfobjekts, das in die Steuereinheit eingelesen wird.

Ausgehend hiervon ist es Aufgabe der vorliegenden Erfindung, das eingangs genannte Verfahren und die eingangs genannte Vorrichtung weiterzuentwickeln.

Diese Aufgabe wird gelöst durch ein Verfahren mit den Merkmalen des Anspruchs 1, sowie durch eine Vorrichtung mit den Merkmalen des Anspruchs 14.

Die Erfindung zeichnet sich dadurch aus, dass eine Rechen- und Auswerteeinrichtung der Druck- und Prüfvorrichtung auf Basis von den Aufdruck beschreibenden Grafikdaten ein den Aufdruck enthaltendes, virtuelles Referenzbild erzeugt, und dass diese Einrichtung dieses virtuelle Referenzbild mit dem von dem Prüforgan aufgenommenen Prüfbild vergleicht. Auf Basis dieses Vergleichs können dann weitere Maßnahmen erfolgen. Beispielsweise kann bei Abweichungen zwischen den vorgenannten Bildern, die ein vorbestimmtes Maß überschreiten, eine Fehlermeldung erzeugt werden und gegebenenfalls der betroffene Druckträger ausgeschleust werden.

Die Erfindung hat unter anderem den besonderen Vorteil, dass ein besonderes Anlernen der Druck- und Prüfvorrichtung, um bestimmte Schriftzeichen - beispielsweise asiatische - erkennen zu können, nicht notwendig ist. Das jeweils erfasste (Ist)Prüfbild, also das von dem Prüforgan aufgenommene, den Aufdruck beinhaltende Bild des Druckträgers, kann mit dem jeweiligen Referenzbild verglichen werden, und zwar mit üblichen Bildanalysemethoden, die beispielsweise auf Pixel-Vergleichen beruhen. Dabei bildet das Referenzbild jeweils unmittelbar das aktuelle Sollbild ab.

Besonders bevorzugt werden zur Erzeugung des jeweiligen virtuellen Referenzbilds jeweils die Grafikdaten herangezogen, auf die das Druckwerk zum Drucken des Aufdrucks zurückgreift. Diese Daten bilden automatisch den tatsächlich von dem Druckwerk im Rahmen des Produktionsprozesses auf den Druckträger aufgebrachten Aufdruck ab. Entsprechend ist es problemlos möglich, im Produktionsprozess die aufzubringenden Aufdrucke zu wechseln. Denn die den Aufdrucken zugeordneten Grafikdaten liegen ohnehin vor. Auf Basis der jeweiligen Grafikdaten kann dann die Druck- und Prüfvorrichtung bzw. die Rechen- und Auswerteeinrichtung derselben jeweils ohne Schwierigkeiten die jeweiligen virtuellen Referenzbilder erzeugen.

Besonders vorteilhaft ist es dabei, wenn es sich bei den Grafikdaten um Vektorgrafikdaten handelt. Regelmäßig arbeiten die Druckwerke bzw. Laserdrucker, die im Bereich der Zigarettenherstellung bzw. Verpackung derselben verwendet werden, auf Basis derartiger Vektorgrafikdaten. Die die Aufdrucke beschreibenden Grafikdaten liegen daher im Vektordatenformat vor. Auf Basis dieser Vektorgrafikdaten erzeugt das Druckwerk dann den jeweiligen Aufdruck, wobei die Vektorgrafikdaten naturgemäß zuvor in entsprechende Steuerungsbefehle für das Druckwerk gewandelt werden, sodass der Schreibkopf des Druckwerks entsprechend gesteuert werden kann.

Erfindungsgemäß werden im Rahmen der Erzeugung des virtuellen Referenzbilds durch die Rechen- und Auswerteeinrichtung zusätzlich zu den den Aufdruck beschreibenden Bilddaten weitere Bilddaten in das virtuelle Referenzbild integriert. Nämlich Bilddaten, die mindestens einen Teilbereich des visuellen Hintergrunds des Druckträgers repräsentieren, auf den der Aufdruck aufgebracht wird bzw. einen den Aufdruck einschließenden Teilbereich. Denn auch das im Produktionsprozess von dem Prüforgan aufgenommene Prüfbild wird regelmäßig einen Teilbereich des visuellen Hintergrunds zeigen. Entsprechend bilden dann das Prüfbild und das virtuelle Referenzbild die gleichen Gegebenheiten ab.

Die Integration von den Druckträgerhintergrund repräsentierenden Bilddaten ist insbesondere dann sinnvoll, wenn es sich bei dem Druckhintergrund nicht um eine weiße bzw. helle Fläche handelt. Häufig wird der jeweilige Druckträger, etwa ein Zigarettenpackungszuschnitt, schon vor der Bedruckung im Prozess durch das Druckwerk einen bestimmten, für die Analyse des Prüfbilds relevanten Druckhintergrund aufweisen. Beispielsweise Symbole, Strichgrafiken, farbige Flächen oder Aufdrucke, die bereits der Zuschnittlieferant vor dem hier betrachteten Produktionsprozess zur Herstellung und/oder Verpackung von Zigaretten aufgebracht hat. Die einen derartigen Druckhintergrund beschreibenden Bilddaten könnten außerhalb des Produktionsprozesses auf einfache Weise erzeugt werden. Beispielsweise, indem von einem entsprechenden Referenzdruckträger mittels einer Kamera ein Bild dieses Druckträgerhintergrunds aufgenommen wird. Derartige Bilddaten könnte grundsätzlich auch der Zuschnittlieferant in digitaler Form mitliefern.

Unabhängig davon kann dann im Rahmen der Erzeugung des virtuellen Referenzbilds beispielsweise eine schlichte Überlagerung bzw. Addition der Bilddaten des auf diese Weise aufgenommenen Bilds des Druckträgerhintergrunds mit den den aufzubringenden Aufdruck repräsentierenden Bilddaten erfolgen.

In weiterer Ausbildung der Erfindung kann vorgesehen sein, dass der jeweilige Druckträger, insbesondere ein ausgewählter Bereich desselben, mittels einer insbesondere eine Kamera umfassenden Erfassungseinrichtung erfasst wird, bevor er von dem Druckwerk mit dem Aufdruck versehen wird. Dabei wird das nachfolgende Aufbringen des Aufdrucks nach Maßgabe mindestens eines von der Erfassungseinrichtung erfassten, den Druckträger charakterisierenden, insbesondere optischen Merkmals gesteuert.

Durch diese Maßnahme ist es unter anderem möglich, den Aufdruck individuell an den jeweiligen Druckträger anzupassen. Dies kann beispielsweise vorteilhaft sein für den Fall, dass der bereits vorproduzierte Druckträgerhintergrund einzelner Druckträger fehlerbehaftet ist, also letztlich von entsprechenden Hintergründen von Referenzdruckträgern abweicht. Etwa weil bestimmte Hintergrundgrafiken verzerrt sind, weil ein ausgewiesener Druckbereich, in dem der Aufdruck während des Produktionsprozesses platziert werden soll, kleiner als erwartet ausgefallen ist, oder weil sich dieser nicht an einer erwarteten Position befindet. Solche Abweichungen kann die Erfassungseinrichtung detektieren und - soweit möglich - die Bedruckung durch das Druckwerk, etwa die Ausrichtung des Druckwerks in Bezug auf die Standardposition, in der sich der jeweilige Druckträger während des Drucks befindet, so anpassen, dass derartige Fehler abgemildert werden können. Es ist auch denkbar, dass die Ausrichtung des Druckwerks relativ zur Standard-Druckträgerposition geändert werden muss, da der Druckträger im Produktionsprozess fehlerhafterweise gegenüber dieser Standard-Druckträgerposition verschoben ist. Auch ist denkbar, das Format des Aufdrucks zu verändern.

Als den Druckträger charakterisierendes, von der Erfassungseinrichtung zu erfassendes Merkmal kommt demnach unter anderem die Ist-Lage des Druckträgers in Frage, insbesondere relativ zu einem ortsfesten Bezugspunkt. Aber auch die Ist-Form des Druckträgers, die beispielsweise durch eine produktionsbedingte Quetschung oder dergleichen von einer Soll-Form abweichen kann, was eine angepasste Bedruckung durch das Druckwerk erforderlich machen kann. Auch kann die Ist-Kontur, die Ist-Qualität oder die Ist-Lage mindestens einer auf dem Druckträger angeordneten Hintergrundgrafik für die Anpassung der Bedruckung eine Rolle spielen. Beispielsweise einer Grafik, die einen mit dem Aufdruck zu versehenen Druckbereich auf dem Druckträger kennzeichnet.

In weiterer Ausbildung der Erfindung kann vorgesehen sein, dass das Prüforgan derselben Bearbeitungsstation zugeordnet ist, an der das Druckwerk den Aufdruck auf den Druckträger aufbringt. Und zwar derart, dass das Prüforgan den Aufdruck ohne zwischenzeitliche Veränderung der Position des Druckträgers relativ zur Bearbeitungsstation unmittelbar im Anschluss an das Aufbringen des Aufdrucks auf den Druckträger aufbringen kann. Mit anderen Worten entspricht die Druckträgerposition während des Aufbringens des Aufdrucks der Prüfposition, also derjenigen, in der von dem Druckträger bzw. von dem den Aufdruck beinhaltenden Bereich desselben das Prüfbild aufgenommen wird.

Standardmäßig werden die Prüfbilder vorrausichtlich nach dem Aufbringen des Aufdrucks aufgenommen werden. Und zwar entweder an derselben Bearbeitungsstation, an der auch die Bedruckung erfolgt. Oder es wird eine separate Druckstation vorgesehen, der das Druckwerk zugeordnet ist, und an der der Aufdruck aufgebracht wird, sowie eine separate, stromab der Druckstation angeordnete Prüfstation, der das Prüforgan zugeordnet ist, an der letztlich die Prüfbilder aufgenommen werden.

Das Prüforgan kann das oder die Prüfbilder aber alternativ auch (an derselben Bearbeitungsstation) aufnehmen, während das Druckwerk den Aufdruck auf den Druckträger aufbringt, und zwar ohne, dass der Druckträger zwischen dem Aufbringen des Aufdrucks und der Bildaufnahme bewegt wird.

Insbesondere in diesem Fall, aber auch dann, wenn die Bildaufnahme nach dem Aufdruck erfolgt, ist jedenfalls theoretisch denkbar, dass nach Maßgabe des Vergleichs zwischen dem virtuellen Referenzbild und dem aufgenommenen Prüfbild gegebenenfalls eine weitere Bedruckung des Druckträgers erfolgt. Und zwar insbesondere zur Korrektur des bereits aufgebrachten Aufdrucks bzw. Teilbereich des Aufdrucks.

Regelmäßig wird diese zusätzliche bzw. nachträgliche Bedruckung durch dasselbe Druckwerk erfolgen, das auch den (ersten) Aufdruck aufgebracht hat bzw. die Standard-Bedruckung vorgenommen hat. Auf diese Weise könnten korrigierbare Fehlbedruckungen, die noch während der Standard-Bedruckung oder im Anschluss daran erkannt werden, innerhalb des übergeordneten Herstellungs- und Verpackungsprozesses korrigiert werden. Beispielsweise ein Ausschleusen der zunächst fehlerhaft bedruckten Packungen wäre dann nicht notwendig. Theoretisch kann die nachträgliche Bedruckung auch von einem weiteren, stromab angeordneten Druckwerk vorgenommen werden.

Naturgemäß kann ein solches Vorgehen nur solche Fehler betreffen, die auch durch weitere Bedruckungen bzw. Nachbedruckungen korrigierbar sind. Beispielsweise ist es denkbar, dass Teilbereiche eines Aufdrucks aufgrund schwierig zu bearbeitender Druckträgeroberflächen während der Standard-Bedruckung nicht oder nicht optimal bedruckt werden. Gegebenenfalls kann eine nachträgliche (erneute) Bedruckung dann Abhilfe schaffen.

Je nachdem, wie lange der Bedruckungsvorgang dauert und je nachdem, wie schnell die entsprechenden Einrichtungen sind, ist auch denkbar, dass der Vergleich zwischen virtuellem Referenzbild und aufgenommenem Prüfbild durch die Rechen- und Auswerteeinrichtung bereits erfolgt, während der Aufdruck aufgebracht wird, und dass dann nach Maßgabe des Ergebnisses dieses Vergleichs bereits der laufende Bedruckungsvorgang zur Korrektur des Aufdrucks verändert wird.

In vielen Fällen wird es allerdings nicht möglich sein, durch eine Nachbedruckung auftretende Fehler zu korrigieren. Wenn demnach nach Maßgabe des Vergleichs zwischen virtuellem Referenzbild und Prüfbild der Druckträger bzw. der Aufdruck auf dem Druckträger gegebenenfalls als fehlerhaft (und ggf. unkorregierbar) bewertet wird, wird eine Fehlermeldung erzeugt und der Druckträger bevorzugt aus dem übergeordneten Herstellungs- und/oder Verpackungsprozess ausgeschleust.

Wie oben bereits angedeutet, umfasst eine erfindungsgemäße Druck- und Prüfvorrichtung mindestens ein Druckwerk sowie mindestens ein Prüforgan, die - wie zuvor beschrieben - entweder an ein und derselben Bearbeitungsstation innerhalb der Herstellungs- und Verpackungslinie angeordnet sein können oder auch in separaten Stationen nacheinander. Die Rechen- und Auswerteeinrichtung, die Teil einer Steuereinrichtung sein kann, sorgt unter anderem für die Erzeugung der virtuellen Referenzbilder. Sie übernimmt zudem die Auswertung der aufgenommenen Prüfbilder etc.

Weitere Merkmale der vorliegenden Erfindung ergeben sich aus den beigefügten Patentansprüchen, der nachfolgenden Beschreibung eines bevorzugten Ausführungsbeispiels sowie den beigefügten Zeichnungen. Darin zeigen:
- Fig. 1: eine Zigarettenpackung, die mit der erfindungsgemäßen Druck- und Prüfvorrichtung bedruckt bzw. geprüft wird,
- Fig. 2: eine schematische Darstellung des Ablaufs einer ersten Ausführungsform des erfindungsgemäßen Druck- und Prüfverfahrens,
- Fig. 3: eine schematische Darstellung des Ablaufs einer weiteren Ausführungsform des erfindungsgemäßen Druck- und Prüfverfahrens,
- Fig. 4: eine zusätzliche Anwendung der Ausführungsform gemäß Fig. 3,
- Fig. 5: eine schematische Darstellung des Ablaufs einer weiteren Ausführungsform des erfindungsgemäßen Druck- und Prüfverfahrens,
- Fig. 6: ein weiteres Beispiel für die Anwendung der Ausführungsform gemäß Fig. 5.

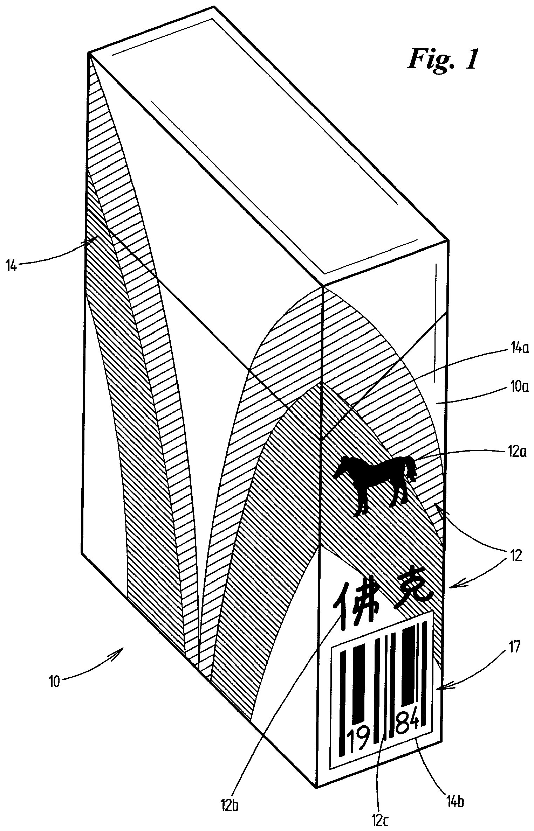

Fig. 1 zeigt als Objekt zum Aufbringen von Aufdrucken eine Standard-Zigarettenpackung 10 des Typs Klappschachtel. Beispielhaft wird anhand dieser das erfindungsgemäße Druck- und Prüfverfahren erläutert.

Das Druck- und Prüfverfahren wird im Rahmen des Produktionsprozesses des jeweiligen Produkts verwendet, hier der Zigarettenpackungen 10. Die Erfindung ist natürlich nicht auf die Bedruckung derartiger Zigarettenpackungen 10 beschränkt. Sie kann allgemein im Zusammenhang mit jeder Vorrichtung zur Herstellung und/oder Verpackung von Zigaretten angewendet werden. Es kommt dabei weder auf die Art der verwendeten Maschinen an, noch auf die Art der herstellbaren Zigaretten bzw. Zigarettenpackungen.

Regelmäßig ist es notwendig, im Rahmen des Produktionsprozesses, das heißt an einer geeigneten Position der Produktionslinie bzw. der entsprechenden Verpackungsmaschine, den jeweiligen Druckträger zu bedrucken und diese Bedruckung auch "inline" auf Fehler zu prüfen. Zu diesem Zweck ist einer solchen Verpackungsmaschine regelmäßig eine entsprechend ausgebildete Druck- und Prüfvorrichtung zugeordnet.

Verpackungsmaschinen zur Verpackung von Zigaretten sind im Übrigen im Stand der Technik hinlänglich bekannt, sodass auf die Details derselben nicht eingegangen werden muss.

Die Druck- und Prüfvorrichtung verfügt über mindestens ein Druckwerk bzw. einen Drucker 11, der im vorliegenden Fall die Zigarettenpackung 10 mit einer Bedruckung 12 versieht. Genauer gesagt wird ein Druckträger 17 bedruckt, nämlich ein Zuschnitt, vorliegend aus Karton. Dieser Druckträger 17 ist hierbei im Rahmen des Produktionsprozesses um eine nicht dargestellte Gruppe von Zigaretten (Zigarettenblock) gefaltet worden. Die Bedruckung 12 erfolgt in den Beispielen der Zeichnungen immer auf einer Schmalseite 10a der Zigarettenpackung 10, kann natürlich aber auch an diversen anderen Positionen vorgenommen werden.

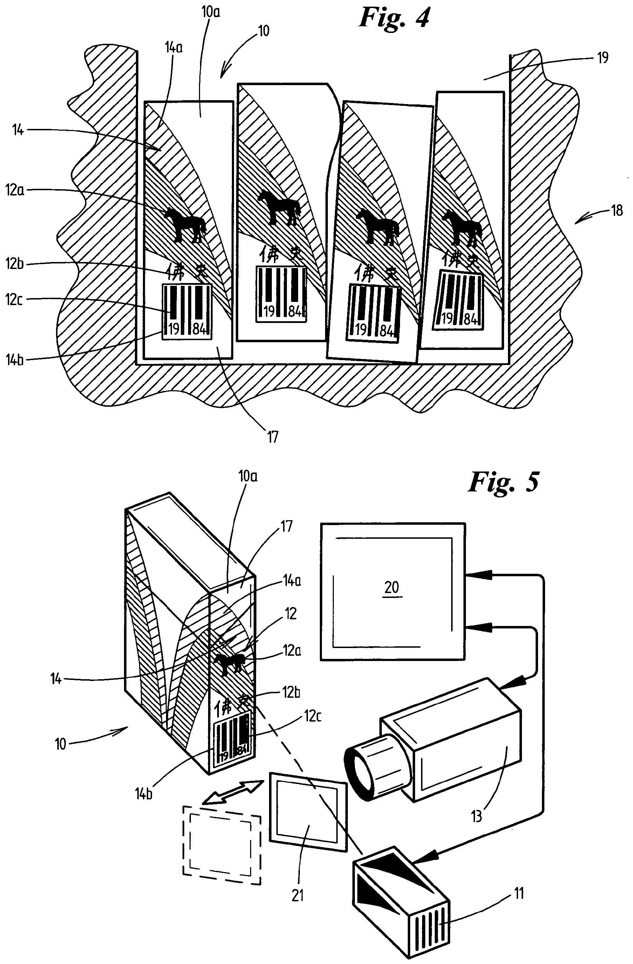

Zum Zwecke der Bedruckung wird der Druckträger 17 im Rahmen des Produktionsprozesses, also "inline", in eine Standard-Druckposition verbracht, in der die Bedruckung durch den Drucker 11 erfolgen kann. Der Drucker 11 kann dabei an verschiedensten Positionen der Verpackungsmaschine angeordnet sein. Beispielsweise benachbart zu einem Revolver 18, in dessen Taschen sich jeweils Gruppen von Zigarettenpackungen befinden, während sie von dem Druckwerk 11 bedruckt werden, vgl. Fig. 4.

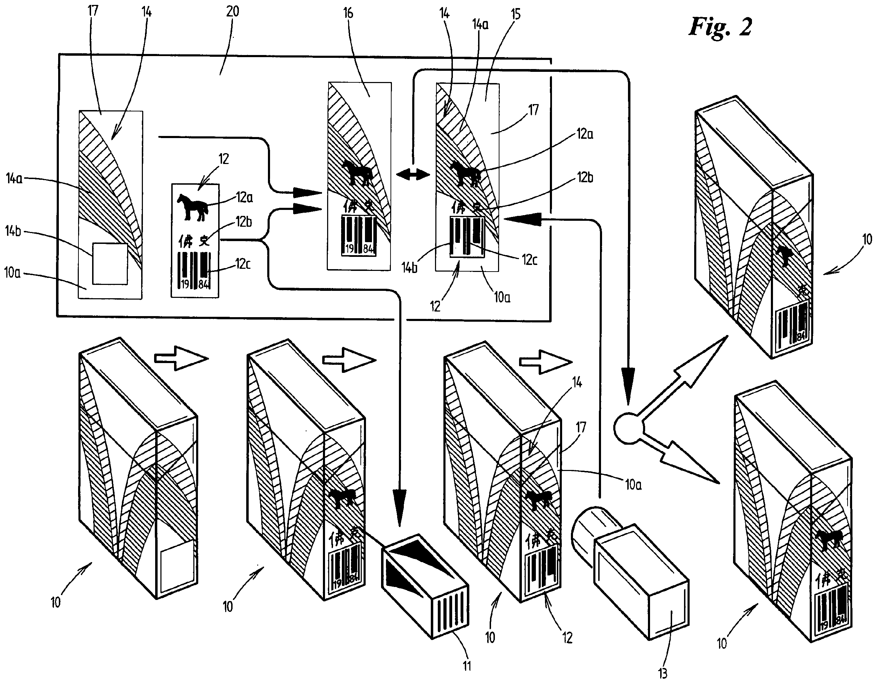

Im Produktionsprozess häufig (aber nicht zwingend) stromab des Druckwerks 11, vgl. die Ausführungsform der Erfindung gemäß Fig. 2, ist ein Prüforgan 13 positioniert. Regelmäßig handelt es sich dabei um eine (elektronische) Kamera, etwa eine CCD-Kamera.

Zur Prüfung der Bedruckung 12 wird der jeweilige Druckträger 17 bzw. die jeweilige Zigarettenpackung 10 im Rahmen des übergeordneten Produktionsprozesses (also ebenfalls "inline") in eine Standard-Prüfposition verbracht, in der das Prüforgan 13 mindestens ein Prüfbild von dem Druckträger 17 bzw. der Schmalseite 10a der Zigarettenpackung 10 aufnehmen kann.

Das Prüforgan 13 ist derart positioniert und ausgerichtet, dass es in einer vorbestimmten Prüfposition, in die der jeweilige Druckträger 17 im Rahmen des Produktionsprozesses verbracht wird, einen die Bedruckung 12 umfassenden Prüf- bzw. Bildaufnahmebereich des Druckträgers 10 (vorliegend als Teilbereich) erfassen kann. Dies ist in dem vorliegenden Beispiel gerade die Schmalseite 10a der Zigarettenpackung 10.

Wie unter anderem in Fig. 1 erkennbar ist, weist die Bedruckung 12 drei getrennte Aufdrucke 12a, 12b sowie 12c auf.

Bei dem Aufdruck 12a handelt es sich um ein schmückendes Bildsymbol, bei dem Aufdruck 12b um einen Text, beispielsweise in asiatischer Sprache, und bei dem Aufdruck 12c um einen Strichcode. Auf die Art der Aufdrucke kommt es erfindungsgemäß aber natürlich nicht an.

Der Druckträger 17 weist des Weiteren einen Druckträgerhintergrund 14 auf, vorliegend eine Hintergrundbedruckung. Der Druckträgerhintergrund 14 umfasst farbige (streifenartige) Grafiken 14a sowie eine (rechteckförmige bzw. quadratische) Grafik 14b, die einen Druckbereich kennzeichnet, der von dem Drucker 11 später mit dem Aufdruck 12c versehen werden soll.

Der Druckträgerhintergrund 14 bzw. die Grafiken 14a, 14b sind bereits von dem Lieferanten des jeweiligen (vorgefertigten) Druckträgers 17, das heißt des (Karton-)Zuschnitts der Zigarettenpackung 10, aufgebracht worden. Er wird daher nicht im vorliegenden Produktionsprozess aufgebracht, sondern ist bereits bei den als vorgefertigtes Ausgangsmaterial vorliegenden Druckträgern 17 vorhanden.

Besonders wichtig ist nun, dass im Rahmen des erfindungsgemäßen Druck- und Prüfungsverfahrens - anders als im Stand der Technik - zur Prüfung der aufgebrachten Aufdrucke 12a-12c auf Fehler zuvor keine Erkennung der auf den jeweiligen Druckträger 17 aufgebrachten Aufdrucke 12a-12c innerhalb der aufgenommenen Prüfbilder erfolgen muss.

Denn erfindungsgemäß werden jeweils von dem Prüforgan 13 aufgenommene Ist-Bilder bzw. Prüfbilder 15 der die Aufdrucke 12a-12c aufweisenden Schmalseiten 10a der zu prüfenden Packungen 10 verglichen mit jeweils einem jeweils von einer Rechen- und Auswerteeinrichtung 20 der Druck- und Prüfvorrichtung erzeugten, virtuellen Referenzbild 16 der jeweiligen Schmalseite 10a. Dieses virtuelle Referenzbild 16 umfasst dabei zum einen die Aufdrucke 12a-12c, zum anderen aber auch die Grafiken 14a, 14b des Druckträgerhintergrunds 14. Den Vergleich des jeweiligen Referenzbilds 16 mit dem jeweiligen Prüfbild 15 übernimmt dann ebenfalls die Rechen- und Auswerteeinrichtung 20.

Dabei entsprechenden die zur Erzeugung des virtuellen Referenzbilds 16 verwendeten Bilddaten der Aufdrucke 12a-12c unmittelbar denjenigen, die das Druckwerk 11 zum Aufbringen der Aufdrucke 12a-12c verwendet. Demnach werden vorliegend die Druckdaten, die das Druckwerk 11 benutzt, um die Aufdrucke 12a-12c auf die Zigarettenpackung 10 zu drucken, dazu benutzt, um aus diesen die entsprechenden virtuellen, die Aufdrucke 12a-12c repräsentierenden Bilddaten zu generieren.

Das Druckwerk 11 verarbeitet vorliegend Vektorgrafikdaten, die entsprechend direkt zur Erzeugung des virtuellen Referenzbilds 16 verwendet werden können.

Vorliegend werden diese virtuellen, die Aufdrucke 12a-12c repräsentierenden Bilddaten mit die Hintergrundgrafiken 14a, 14b repräsentierenden Bilddaten überlagert bzw. zu diesen hinzu addiert. Entsprechend ist das resultierende, virtuelle Referenzbild 16 nahezu ein 1-zu-1-Abbild der jeweils von dem Prüforgan 13 aufgenommenen Zigarettenpackungsseite 10a.

Mit bewährten Bildverarbeitungsmethoden kann die Rechen- und Auswerteeinrichtung 20 nun letztlich einen Bildvergleich auf Basis von Pixelvergleichen zwischen dem Prüfbild 15 der Packungsseite 10a der Zigarettenpackung 10 und dem virtuellen Referenzbild 16 vornehmen.

Etwaige Fehler, die das Prüfbild 15 im Vergleich zum virtuellen Referenzbild 16 aufweist, würden im Rahmen der Bildanalyse festgestellt werden.

Solche Fehler können beispielsweise in Fehlerzuständen des Druckwerks 11 begründet sein, sodass dieses den jeweiligen Aufdruck 12a-12c in nicht idealer Weise aufdrucken kann. Die Fehler könnten aber auch an einer fehlerhaften Ausrichtung der Zigarettenpackung 10 bzw. der Schmalseite 10a relativ zum Druckwerk 11 beim Beschreiben derselben liegen, in einer von der Norm abweichenden Formgebung bzw. Format der Zigarettenpackung 10, in einer mangelnden Oberflächenbeschaffenheit der zu bedruckenden Oberfläche etc.

Anders als im Stand der Technik ist es nicht notwendig, mittels geeigneter Analysemethoden den jeweiligen Aufdruck 12a-12c in dem jeweiligen Prüfbild 15 herauszufiltern. Insbesondere ist es nicht notwendig, semantische bzw. inhaltliche Informationen der Aufdrucke 12a-12c aus den Prüfbildern zu extrahieren. So kommt es im Rahmen der vorliegenden Beispiele demnach nicht auf die jeweiligen, dem Schriftzug 12b bzw. der Kodierung 12c liegenden Informationen an.

Die Rechen- und Auswerteeinrichtung 20, mit der die virtuellen Bilder erzeugt und die Prüfbilder jeweils analysiert und insbesondere mit dem jeweiligen virtuellen Referenzbild verglichen werden, kann beispielsweise Teil einer Steuereinheit der übergeordneten Maschine oder der Druck- und Prüfvorrichtung sein. Sie kann natürlich auch separat sein. Sie kann unter anderem eine oder mehrere übliche Computereinrichtungen umfassen, beispielsweise mit entsprechender (automatisch ablaufender) Bildauswerte- bzw. -analysesoftware zur Auswertung der von dem Prüforgan 13 aufgenommenen Bilder.

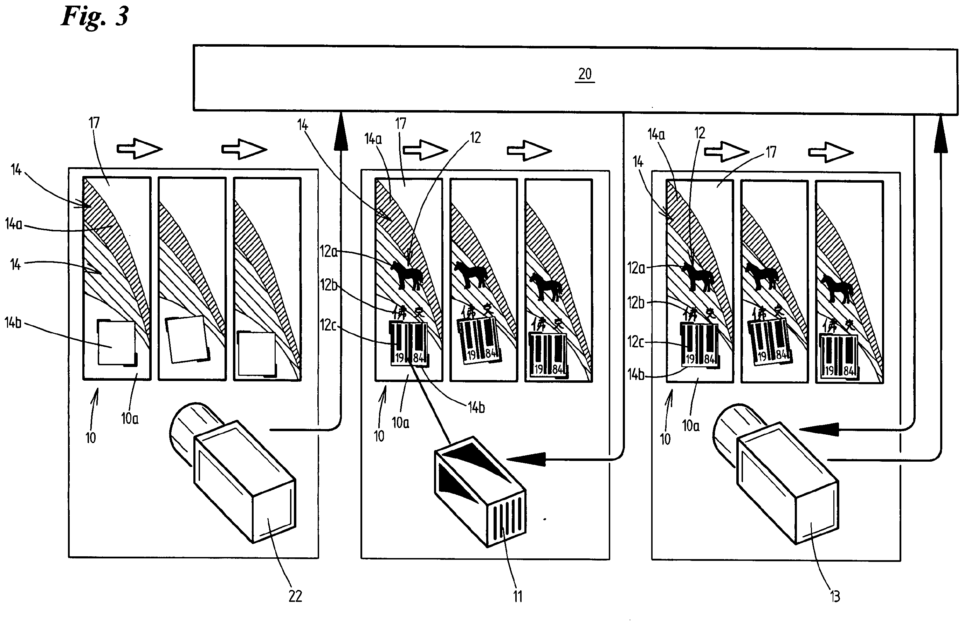

Eine Weiterbildung der Erfindung zeigt skizzenhaft die Fig. 3.

Danach sind im Produktionsprozess nicht nur hintereinander das die Bedruckungen 12 aufbringende Druckwerk 11 und das die jeweiligen Bedruckungen prüfende Prüforgan 13 vorgesehen, sondern stromauf des Druckwerks 11 ist ein zusätzliches Erfassungsorgan 22 einer Erfassungseinrichtung der Druck- und Prüfvorrichtung angeordnet. Mit dem ebenfalls als Kamera ausgebildeten Erfassungsorgan 22 werden die bereits auf der Schmalseite 10a befindlichen Hintergrundgrafiken 14a, 14b erfasst.

Die Rechen- und Auswerteeinrichtung 20 der Druck- und Prüfvorrichtung analysiert anschließend die von dem Erfassungsorgan 22 aufgenommenen Bilder der zu bedruckenden Zigarettenpackungsseite 10a. Dabei kann sie unter anderem Abweichungen von Merkmalen der Hintergrundgrafiken 14a, 14b von Standardwerten bzw. von Referenzwerten feststellen. Beispielsweise kann sie erkennen, wenn die Hintergrundgrafiken 14a, 14b gegenüber Standardpositionen relativ zur erfassten Packungsseite 10a verschoben oder verdreht positioniert sind, beispielsweise verursacht durch etwa in der Tasche 19 des Revolvers 18 nicht korrekt, d.h. von der Norm abweichend positionierte oder im Format veränderte (beispielsweise unzulässig eingedrückte) Packungen 10, vgl. Fig. 4.

Dies meldet die Rechen- und Auswerteeinrichtung 20 an die Steuerung des Druckwerks 11. Anschließend sendet diese entsprechende Signale an das Druckwerk 11, sodass die von diesem aufzubringende Bedruckung 12 entsprechend korrigiert wird bzw. die Druckparameter entsprechend verändert werden.

Eine weitere Weiterbildung der Erfindung zeigt die Fig. 5.

Dabei ist das Prüforgan 13 derselben Bearbeitungsstation zugeordnet wie das Druckwerk 11, das die Aufdrucke 12a-12c auf die Schmalseite 10a aufbringt. Und zwar derart, dass das Prüforgan 13 den Aufdruck ohne zwischenzeitliche Veränderung der Position der Zigarettenpackung 10 relativ zur Bearbeitungsstation unmittelbar im Anschluss an das Aufbringen der Aufdrucke 12a-12c auf den Druckträger 17 aufnehmen kann. Mit anderen Worten entspricht die Position der Zigarettenpackung 10 während des Aufbringens der Aufdrucke 12a-12c der Prüfposition derselben, also derjenigen, in der das Prüforgan 13 die Prüfbilder 15 aufnimmt. Die kann beispielsweise durch Verwendung eines aus dem Strahlweg des Druckwerks 11 oder des Prüforgans 13 verfahrbaren Spiegels oder alternativ eines halbdurchlässigen Spiegels 21 erreicht werden. Das Druckwerk 11, das Prüforgan 13, der halbdurchlässige Spiegel 21 und die Zigarettenpackung 10 werden jeweils im Produktionsprozess so positioniert, dass gleichzeitig die Blickrichtung des Prüforgans 13 und die Strahlrichtung des vorliegend als Laserdrucker ausgebildeten Druckwerks 11 auf die Schmalseite 10a der Zigarettenpackung 10 bzw. den Druck- und Prüfbereich gerichtet sind.

In der Konfiguration der Fig. 5 könnte die Prüfung der Aufdrucke 12a-12c im Übrigen theoretisch bereits erfolgen, während das Druckwerk 11 noch die Aufdrucke 12a-12c aufbringt. In diesem Fall müssten naturgemäß zeitlich nacheinander eine Vielzahl von Prüfbildern 15 der zu prüfenden Schmalseite 10a aufgenommen und ggf. bereits ausgewertet werden.

Theoretisch auch in dem vorgenannten Fall, aber vornehmlich dann, wenn die Prüfbilder 15 jeweils erst nach Fertigstellung der Bedruckung 12 aufgenommen werden, ist denkbar, dass nach Maßgabe des im Rahmen der Auswertung des oder der Prüfbilder 15 erfolgenden Vergleichs zwischen dem virtuellen Referenzbild 16 und dem jeweils aufgenommenen Prüfbild 15 gegebenenfalls eine weitere Bedruckung der Schmalseite 10a vorgenommen wird. Und zwar insbesondere zur Korrektur des bereits aufgebrachten Aufdrucks bzw. Teilbereich des Aufdrucks 12a-12c.

Regelmäßig wird diese zusätzliche bzw. nachträgliche Bedruckung durch dasselbe Druckwerk 11 erfolgen, das auch die (ersten) Aufdrucke 12a-12c aufgebracht hat bzw. die Standard-Bedruckung vorgenommen hat. Auf diese Weise könnten korrigierbare Fehlbedruckungen, die noch während der Standard-Bedruckung oder im Anschluss daran erkannt werden, innerhalb des übergeordneten Produktionsprozesses korrigiert werden.

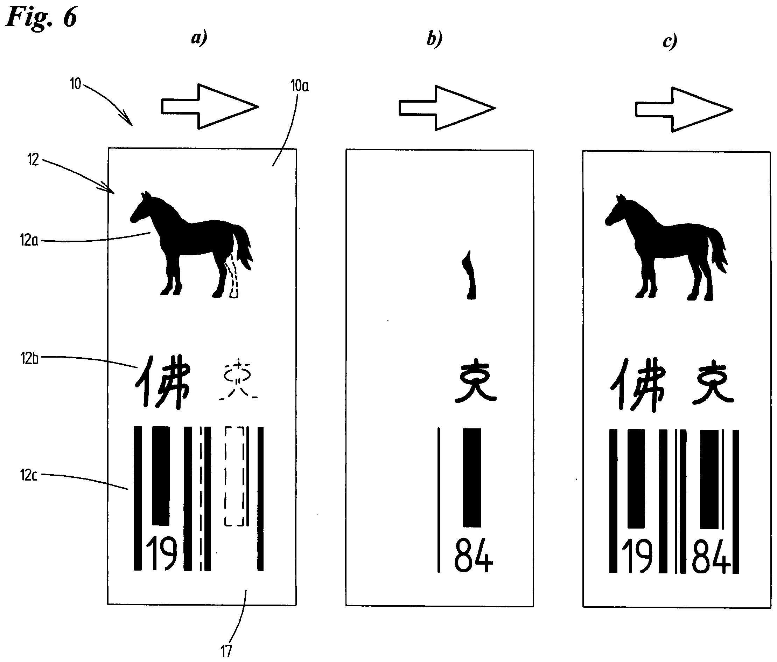

In Fig. 6 ist beispielhaft gezeigt, dass im Rahmen der Standard-Bedruckung in Fig. 6a) mit gestrichelten Linien versehene Bereiche der Aufdrucke 12a-12c nicht gedruckt wurden. Die fehlenden Druckbereiche werden im Rahmen der Auswertung des Prüfbilds 15 erfasst. Anschließend erfolgt eine Nachbedruckung ausschließlich der fehlenden Bereiche, vgl. Fig. 6b). Das fertige Bild der Schmalseite 10a zeigt Fig. 6c).

### Bezugszeichenliste

10 Zigarettenpackung
10a Schmalseite
11 Drucker
12 Bedruckung
12a Aufdruck
12b Aufdruck
12c Aufdruck
13 Prüforgan
14 Druckträgerhintergrund
14a Hintergrundgrafik
14b Hintergrundgrafik
15 Prüfbild
16 Referenzbild
17 Druckträger
18 Revolver
19 Tasche
20 Rechen-und
Auswerteeinrichtung
21 Halbdurchlässiger Spiegel
22 Erfassungsorgan

## Patentansprüche

1. Verfahren zum automatischen Aufbringen von Aufdrucken auf bei der Herstellung und/oder Verpackung von Zigaretten verwendeten Druckträgern (17), insbesondere auf Zigarettenpackungen (10) oder Zuschnitten für Zigarettenpackungen, und zum nachfolgenden automatischen optischen Prüfen der Aufdrucke (12a-12c), bei dem im Rahmen des Herstellungs- und/oder Verpackungsprozesses der jeweilige Aufdruck (12a-12c) mittels eines Druckwerks (11), insbesondere eines Laserdruckers, auf den Druckträger (17) aufgebracht wird sowie mindestens ein den aufgebrachten Aufdruck (12a-12c) beinhaltendes Prüfbild (5) mit einem Prüforgan (13) aufgenommen wird, insbesondere einer Kamera, **dadurch gekennzeichnet, dass** auf Basis von den aufzubringenden Aufdruck (12a-12c) beschreibenden Grafikdaten, insbesondere Vektorgrafikdaten, ein den Aufdruck (12a-12c) enthaltendes, virtuelles Referenzbild (16) erzeugt wird, und dass das virtuelle Referenzbild (16) mit dem von dem Prüforgan (13) aufgenommen Prüfbild (15) verglichen wird, wobei im Rahmen der Erzeugung des virtuellen Referenzbilds (16) Bilddaten in das virtuelle Referenzbild (16) integriert werden, die mindestens einen Teilbereich des visuellen Hintergrunds (14) des Druckträgers (17) repräsentieren, auf den der Aufdruck (12a-12c) aufgebracht wird, insbesondere einen den Aufdruck (12a-12c) einschließenden Teilbereich.

2. Verfahren gemäß Anspruch 1, **dadurch gekennzeichnet, dass** das Druckwerk (11) den Aufdruck (12a-12c) auf Basis der diesen beschreibenden Grafikdaten aufbringt, wobei die den Aufdruck (12a-12c) beschreibenden Grafikdaten in Steuerungsbefehle gewandelt werden, mit denen das Druckwerk (11) zum Aufbringen des Aufdrucks (12a-12c) gesteuert wird.

3. Verfahren gemäß Anspruch 1 oder 2, **dadurch gekennzeichnet, dass** die den Druckträgerhintergrund (14) repräsentierenden Bilddaten aus einem mit einer Kamera aufgenommen Referenzbild eines Referenzdruckträgers stammen oder aus diesem abgeleitet sind.

4. Verfahren gemäß einem oder mehreren der Ansprüche 1 bis 3, **dadurch gekennzeichnet, dass** im Rahmen der Erzeugung des virtuellen Referenzbilds (16) die den Druckträgerhintergrund (14) repräsentierenden Bilddaten mit den den aufzubringenden Aufdruck repräsentierenden Grafikdaten überlagert werden.

5. Verfahren gemäß einem oder mehreren der vorhergehenden Ansprüche, **dadurch gekennzeichnet, dass** der jeweilige Druckträger (17), insbesondere ein ausgewählter Bereich desselben, bevor er von dem Druckwerk (11) mit dem Aufdruck (12a-12c) versehen wird, mittels einer insbesondere eine Kamera umfassenden Erfassungseinrichtung erfasst wird, und dass das nachfolgende Aufbringen des Aufdrucks (12a-12c) nach Maßgabe mindestens eines von der Erfassungseinrichtung erfassten, den Druckträger (17) charakterisierenden, insbesondere optischen Merkmals gesteuert wird.

6. Verfahren gemäß einem oder mehreren der vorhergehenden Ansprüche, **dadurch gekennzeichnet, dass** als charakterisierendes Merkmal die Ist-Lage des Druckträgers (17) erfasst wird, oder die Ist-Lage, die Ist-Form, die Ist-Kontur oder die Ist-Qualität mindestens einer auf dem Druckträger (17) angeordneten Grafik.

7. Verfahren gemäß Anspruch 5 oder 6, **dadurch gekennzeichnet, dass** als charakterisierendes Merkmal die Ist-Lage oder die Ist-Kontur des Druckträgers (17) oder die Ist-Lage, die Ist-Kontur oder die Ist-Form einer auf dem Druckträger (17) befindlichen Grafik (14) erfasst wird.

8. Verfahren gemäß einem oder mehreren der vorhergehenden Ansprüche, **dadurch gekennzeichnet, dass** nach Maßgabe des erfassten Merkmals das Druckwerk (11) gesteuert wird, insbesondere derart, dass das Druckwerk (11) abhängig von dem erfassten Merkmal den Aufdruck an unterschiedlichen Positionen auf den Druckträger (17) aufbringt und/oder in unterschiedlichen Formaten.

9. Verfahren gemäß einem oder mehreren der vorhergehenden Ansprüche, **dadurch gekennzeichnet, dass** das Prüforgan (13) an derselben Bearbeitungsstation angeordnet ist, an der das Druckwerk (11) den Aufdruck (12a-12c) auf den Druckträger (17) aufbringt, derart, dass das Prüforgan (13) den Aufdruck (12a-12c) ohne Veränderung der Position des Druckträgers (17) relativ zur Bearbeitungsstation unmittelbar im Anschluss an das Aufbringen des Aufdrucks (12a-12c) auf den Druckträger (17) aufnehmen kann.

10. Verfahren gemäß einem oder mehreren der vorhergehenden Ansprüche, **dadurch gekennzeichnet, dass** das Prüforgan (13) das Prüfbild (15) des Aufdrucks (12a-12c) aufnimmt, während das Druckwerk (11) den Aufdruck (12a-12c) auf den Druckträger (17) aufbringt oder im Anschluss daran, und zwar ohne dass der Druckträger (17) zwischen dem Aufbringen des Aufdrucks (12a-12c) und der Bildaufnahme bewegt wird.

11. Verfahren gemäß Anspruch 10, **dadurch gekennzeichnet, dass** nach Maßgabe des Vergleichs zwischen dem virtuellen Referenzbild (16) und dem Prüfbild (15) gegebenenfalls eine weitere Bedruckung des Druckträgers (17) zur Korrektur des aufgebrachten Aufdrucks (12a-12c) vorgenommen wird, bevorzugt durch dasselbe Druckwerk (11), das den Aufdruck (12a-12c) aufgebracht hat.

12. Verfahren gemäß Anspruch 10, **dadurch gekennzeichnet, dass** der Vergleich zwischen dem virtuellen Referenzbild (16) und dem Prüfbild (15) erfolgt, während der Aufdruck aufgebracht wird, und dass nach Maßgabe des Ergebnisses des Vergleichs der laufende Bedruckungsvorgang zur Korrektur des Aufdrucks (12a-12c) verändert wird.

13. Verfahren gemäß einem oder mehreren der vorhergehenden Ansprüche, **dadurch gekennzeichnet, dass** nach Maßgabe des Vergleichs zwischen dem virtuellen Referenzbild (16) und dem Prüfbild (15) der Druckträger (17) bzw. der Aufdruck (12a-12c) auf dem Druckträger (17) gegebenenfalls als fehlerhaft bewertet wird und aus dem übergeordneten Herstellungs- und/oder Verpackungsprozess ausgeschleust wird.

14. Vorrichtung zum automatischen Aufbringen von Aufdrucken (12a-12c) auf bei der Herstellung und/oder Verpackung von Zigaretten verwendeten Druckträgern (17), insbesondere auf Zigarettenpackungen (10) oder Zuschnitten für Zigarettenpackungen (10), und zum nachfolgenden automatischen, optischen Prüfen der Aufdrucke (12a-12c), insbesondere zur Durchführung des Verfahrens gemäß Anspruch 1, mit einem Druckwerk (11), insbesondere einem Laserdrucker, mit dem im Rahmen des Herstellungs- und/oder Verpackungsprozesses der jeweilige Aufdruck (12a-12c) auf den Druckträger (17) aufbringbar ist, sowie mit einem Prüforgan (13), insbesondere einer Kamera, mit dem mindestens ein den aufgebrachten Aufdruck (12a-12c) beinhaltendes Prüfbild (15) aufnehmbar ist, **gekennzeichnet durch** eine Rechen- und Auswerteeinrichtung (20), die derart ausgebildet ist, dass sie auf Basis von den aufzubringenden Aufdruck (12a-12c) beschreibenden Grafikdaten ein den Aufdruck (12a-12c) enthaltendes, virtuelles Referenzbild (16) erzeugt, dass sie das virtuelle Referenzbild (16) mit dem von dem Prüforgan (13) aufgenommen Prüfbild (15) vergleicht, und dass sie im Rahmen der Erzeugung des virtuellen Referenzbilds (16) Bilddaten in das virtuelle Referenzbild (16) integriert, die mindestens einen Teilbereich des visuellen Hintergrunds (14) des Druckträgers (17) repräsentieren, auf den der Aufdruck (12a-12c) aufgebracht wird, insbesondere einen den Aufdruck (12a-12c) einschließenden Teilbereich.

## Claims

1. A method for automatically applying imprints to print carriers (17) used in the production and/or packaging of cigarettes, in particular to cigarette packs (10) or blanks for cigarette packs, and for subsequently automatically checking the imprints (12a - 12c) in an optical manner, in the case of which the respective imprint (12a - 12c) in the context of the production and/or packaging process is applied to the print carrier (17) by means of a printing unit (11), in particular a laser printer, and at least one check image (5) including the applied imprint (12a - 12c) is captured by way a checking member (13), in particular a camera, **characterized in that**, based on the graphic data, in particular the vector-graphics data, describing the imprint (12a - 12c) to be applied, a virtual reference image (16) including the imprint (12a - 12c) is generated, and **in that** the virtual reference image (16) is compared with the check image (15) that has been captured by the checking member (13), wherein in the context of generating the virtual reference image (16), image data that represent at least a part-region of the optical background (14) of the print carrier (17) onto which the imprint (12a - 12c) is applied, in particular a part-region that includes the imprint (12a - 12c), is integrated into the virtual reference image (16).

2. The method as claimed in claim 1, **characterized in that** the printing unit (11), based on the graphic data describing the imprint (12a - 12c), applies the latter, wherein the graphic data describing the imprint (12a - 12c) are converted to control commands by way of which the printing unit (11) is controlled in order for the imprint (12a - 12c) to be applied.

3. The method as claimed in claim 1 or 2, **characterized in that** the image data that represent the print-carrier background (14) emanates from a reference image of a reference print carrier that has been captured by a camera, or is derived therefrom.

4. The method as claimed in one or a plurality of the claims 1 to 3, **characterized in that** in the context of generating the virtual reference image (16) the image data representing the print-carrier background (14) are superimposed by the graphic data representing the imprint to be applied.

5. The method as claimed in one or a plurality of the preceding claims, **characterized in that** the respective print carrier (17), in particular a selected region of the latter, prior to being provided with the imprint (12a - 12c) by the printing unit (11), is detected by means of a detection installation comprising in particular a camera, and **in that** the subsequent application of the imprint (12a - 12c) is controlled according to the stipulation of at least one, in particular optical, feature that characterizes the print carrier (17) and is detected by the detection installation.

6. The method as claimed in one or a plurality of the preceding claims, **characterized in that** the actual positioning of the print carrier (17), or the actual positioning, the actual shape, the actual contour, or the actual quality of at least one graphic item that is disposed on the print carrier (17) is detected as the characterizing feature of the print carrier (17).

7. The method as claimed in claim 5 or 6, **characterized in that** the actual positioning or the actual contour of the print carrier (17), or the actual positioning, the actual contour, or the actual shape of a graphic item (14) that is located on the print carrier (17) is detected as the characterizing feature.

8. The method as claimed in one or a plurality of the preceding claims, **characterized in that** the printing unit (11) is controlled according to the stipulation of the detected feature, in particular in such a manner that the printing unit (11), depending on the detected feature, applies the imprint to the print carrier (17) at different positions and/or in different formats.

9. The method as claimed in one or a plurality of the preceding claims, **characterized in that** the checking member (13) is disposed in such a manner on the same processing station at which the printing unit (11) applies the imprint (12a - 12c) to the print carrier (17) that the checking member (13) may capture the imprint (12a - 12c) immediately upon application of the imprint (12a - 12c) to the print carrier (17), without any modification of the position of the print carrier (17) in relation to the processing station.

10. The method as claimed in one or a plurality of the preceding claims, **characterized in that** the checking member (13) captures the check image (15) of the imprint (12a - 12c) while the printing unit (11) applies the imprint (12a - 12c) to the print carrier (17) or subsequently thereto, specifically without the print carrier (17) being moved between the imprint (12a - 12c) application and the image capture.

11. The method as claimed in claim 10, **characterized in that** further printing of the printing carrier (17) for correcting the applied imprint (12a - 12c) is optionally performed according to the stipulation of the comparison between the virtual reference image (16) and the check image (15), preferably by the same printing unit (11) that has applied the imprint (12a - 12c).

12. The method as claimed in claim 10, **characterized in that** the comparison between the virtual reference image (16) and the check image (15) is performed while the imprint is being applied, and that the ongoing printing procedure, according to the stipulation of the result of the comparison, is modified in order for the imprint (12a - 12c) to be corrected.

13. The method as claimed in one or a plurality of the preceding claims, **characterized in that**, according to the stipulation of the comparison between the virtual reference image (16) and the check image (15), the print carrier (17), or the imprint (12a - 12c) on the print carrier (17), respectively, is optionally evaluated as being defective and is discharged from the superordinate production and/or packaging process.

14. An apparatus for automatically applying imprints (12a - 12c) to print carriers (17) used in the production and/or packaging of cigarettes, in particular to cigarette packs (10) or blanks for cigarette packs, and for subsequently automatically checking the imprints (12a - 12c) in an optical manner, in particular for carrying out the method as claimed in claim 1, having a printing unit (11), in particular a laser printer, by way of which the respective imprint (12a - 12c) is capable of being applied to the print carrier (17) in the context of the production and/or packaging process, and having a checking member (13), in particular a camera, by way of which at least one check image (15) including the applied imprint (12a - 12c) is capable of being captured, **characterized by** a computing and evaluating installation (20) which is configured in such a manner that the latter, based on the graphic data describing the imprint (12a - 12c) to be applied, generates a virtual reference image (16) including the imprint (12a - 12c), and in that said computing and evaluating installation (20) compares the virtual reference image (16) with the check image (15) that has been captured by the checking member (13), and that, in the context of generating the virtual reference image (16), it integrates into the virtual reference image (16) image data that represent at least a part-region of the optical background (14) of the print carrier (17) onto which the imprint (12a - 12c) is applied, in particular a part-region that includes the imprint (12a - 12c).

## Revendications

1. Procédé d'application automatique d'impressions sur des supports d'impression (17) utilisés lors de la fabrication et/ou l'emballage de cigarettes, en particulier sur des paquets de cigarettes (10) ou des pièces découpées pour des paquets de cigarettes, et pour le contrôle optique automatique ultérieur des impressions (12a-12c), dans lequel on applique l'impression respective (12a-12c) au moyen d'une unité d'impression (11), en particulier d'une imprimante laser, sur le support d'impression (17) dans le cadre du processus de fabrication et/ou d'emballage, et on enregistre avec un organe de contrôle (13), en particulier une caméra, au moins une image de contrôle (5) contenant l'impression appliquée (12a-12c), **caractérisé en ce que** l'on produit sur la base de données graphiques décrivant l'impression à appliquer (12a-12c), en particulier de données graphiques vectorielles, une image de référence virtuelle (16) contenant l'impression (12a-12c), et **en ce que** l'on compare l'image de référence virtuelle (16) avec l'image de contrôle (15) enregistrée avec l'organe de contrôle (13), dans lequel on intègre dans le cadre de la production de l'image de référence virtuelle (16), des données d'image dans l'image de référence virtuelle (16), qui représentent au moins une région partielle de l'arrière-plan visuel (14) du support d'impression (17), sur lequel on applique l'impression (12a-12c), en particulier une région partielle entourant l'impression (12a-12c).

2. Procédé selon la revendication 1, **caractérisé en ce que** l'unité d'impression (11) applique l'impression (12a-12c) sur la base des données graphiques qui la décrivent, dans lequel on convertit les données graphiques décrivant l'impression (12a-12c) en des instructions de commande, avec lesquelles on commande l'unité d'impression (11) pour l'application de l'impression (12a-12c).

3. Procédé selon la revendication 1 ou 2, **caractérisé en ce que** les données d'image représentant l'arrière-plan (14) du support d'impression émanent d'une image de référence d'un support d'impression de référence enregistrée avec une caméra ou sont dérivées de celle-ci.

4. Procédé selon une ou plusieurs des revendications 1 à 3, **caractérisé en ce que** dans le cadre de la production d'une image de référence virtuelle (16) on superpose les données d'image représentant l'arrière-plan du support d'impression (14) avec les données graphiques représentant l'impression à appliquer.

5. Procédé selon une ou plusieurs des revendications précédentes, **caractérisé en ce que** l'on détecte le support d'impression respectif (17), en particulier une zone sélectionnée de celui-ci, avant qu'il soit muni de l'impression (12a-12c) par l'unité d'impression (11), au moyen d'un dispositif de détection comprenant en particulier une caméra, et **en ce que** l'on commande l'application suivante de l'impression (12a-12c) selon au moins une caractéristique, en particulier optique, caractérisant le support d'impression (17) et détectée par le dispositif de détection.

6. Procédé selon une ou plusieurs des revendications précédentes, **caractérisé en ce que** l'on détecte comme caractéristique caractérisante la position réelle du support d'impression (17), ou la position réelle, la forme réelle, le contour réel ou la qualité réelle d'au moins un graphique disposé sur le support d'impression (17).

7. Procédé selon une revendication 5 ou 6, **caractérisé en ce que** l'on détecte comme caractéristique caractérisante la position réelle ou le contour réel du support d'impression (17) ou la position réelle, le contour réel ou la forme réelle d'un graphique (14) se trouvant sur le support d'impression (17).

8. Procédé selon une ou plusieurs des revendications précédentes, **caractérisé en ce que** l'on commande l'unité d'impression (11) selon la caractéristique détectée, en particulier de telle manière que l'unité d'impression (11) applique en fonction de la caractéristique détectée l'impression dans différentes positions sur le support d'impression (17) et/ou en différents formats.

9. Procédé selon une ou plusieurs des revendications précédentes, **caractérisé en ce que** l'organe de contrôle (13) est disposé à la même station de traitement, à laquelle l'unité d'impression (11) applique l'impression (12a-12c) sur le support d'impression (17), de telle manière que l'organe de contrôle (13) puisse enregistrer l'impression (12a-12c) immédiatement à la suite de l'application de l'impression (12a-12c) sur le support d'impression (17) sans changement de la position du support d'impression (17) par rapport à la station de traitement.

10. Procédé selon une ou plusieurs des revendications précédentes, **caractérisé en ce que** l'organe de contrôle (13) enregistre l'image de contrôle (15) de l'impression (12a-12c), pendant que l'unité d'impression (11) applique l'impression (12a-12c) sur le support d'impression (17) ou à la suite de celle-ci, notamment sans que le support d'impression (17) soit déplacé entre l'application de l'impression (12a-12c) et l'enregistrement de l'image.

11. Procédé selon la revendication 10, **caractérisé en ce que** l'on opère une autre impression du support d'impression (17), selon la comparaison entre l'image de référence virtuelle (16) et l'image de contrôle (15), pour la correction de l'impression appliquée (12a-12c), de préférence par la même unité d'impression (11), qui a appliqué l'impression (12a-12c).

12. Procédé selon la revendication 10, **caractérisé en ce que** l'on opère la comparaison entre l'image de référence virtuelle (16) et l'image de contrôle (15), pendant que l'on applique l'impression, et **en ce que** l'on change selon le résultat de la comparaison le processus d'impression en cours pour la correction de l'impression (12a-12c).

13. Procédé selon une ou plusieurs des revendications précédentes, **caractérisé en ce que** l'on juge éventuellement comme défectueux le support d'impression (17) ou l'impression (12a-12c) sur le support d'impression (17), selon la comparaison entre l'image de référence virtuelle (16) et l'image de contrôle (15) et on l'exclut hors du processus de fabrication et/ou d'emballage de niveau supérieur.

14. Dispositif d'application automatique d'impressions (12a-12c) sur des supports d'impression (17) utilisés lors de la fabrication et/ou l'emballage de cigarettes, en particulier sur des paquets de cigarettes (10) ou des pièces découpées pour des paquets de cigarettes (10), et pour le contrôle optique automatique ultérieur des impressions (12a-12c), en particulier pour la mise en oeuvre du procédé selon la revendication 1, avec une unité d'impression (11), en particulier une imprimante laser, avec laquelle l'impression respective (12a-12c) peut être appliquée sur le support d'impression (17) dans le cadre du processus de fabrication et/ou d'emballage, ainsi qu'avec un organe de contrôle (13), en particulier une caméra, avec lequel au moins une image de contrôle (15) contenant l'impression appliquée (12a-12c) peut être enregistrée, **caractérisé par** un dispositif de calcul et d'évaluation (20), qui est configuré de telle manière qu'il produise sur la base de données graphiques décrivant l'impression à appliquer (12a-12c) une image de référence virtuelle (16) contenant l'impression (12a-12c), qu'il compare l'image de référence virtuelle (16) avec l'image de contrôle (15) enregistrée par l'organe de contrôle (13), et que, dans le cadre de la production de l'image de référence virtuelle (16), il intègre dans l'image de référence virtuelle (16) des données d'image, qui représentent au moins une région partielle de l'arrière-plan visuel (14) du support d'impression (17), sur lequel on applique l'impression (12a-12c), en particulier une région partielle entourant l'impression (12a-12c).
